Europäisches Patentamt

European Patent Office

Office européen des brevets

(11) Publication number: **0 242 597**
**A2**

# EUROPEAN PATENT APPLICATION

(21) Application number: **87104075.4**

(22) Date of filing: **20.03.87**

(51) Int. Cl.⁴: **G11B 21/20** , G11B 5/54 , G11B 7/09

(30) Priority: **22.04.86 US 855022**

(43) Date of publication of application:
**28.10.87 Bulletin 87/44**

(84) Designated Contracting States:
**BE CH DE FR GB LI NL SE**

(71) Applicant: **International Business Machines Corporation**
**Old Orchard Road**
**Armonk, N.Y. 10504(US)**

(72) Inventor: **Cocke, John**
**10610 Morado Circle**
**Austin Texas 78759(US)**
Inventor: **Khanna, Vijayeshwar Das**
**3 Hudson View Hill**
**Ossining, NewYork 10562(US)**
Inventor: **Yeack-Scranton, Celia Elizabeth**
**Twin Lakes Road**
**South Salem New York 10547(US)**

(74) Representative: **Herzog, F. Joachim, Dipl.-Ing**
**IBM Deutschland GmbH Schönaicher**
**Strasse 220**
**D-7030 Böblingen(DE)**

(54) **Micro mechanical actuation of a transducer head on a slider.**

(57) A micro-mechanical actuated transducer head on an air bearing slider is disclosed herein. The transducer head is made to move relative to the slider assembly by the incorporation of an actuating material intermediately to the slider assembly and head. The actuating material can be: electromechanical, piezoelectric, electrostrictive, thermal, pneumatic, or hydraulic. The actuating material can be incorporated either integral to the head/slider assembly or made to bridge the slider to head attachment. With the incorporation of said actuatable material, said head can be moved micro-mechanically relative to said slider effecting relative and controllable motion either horizontally and/or vertically.

FIG. 1

DIRECTION OF DISK MOTION

## MICRO MECHANICAL ACTUAL TRANSDUCER HEAD ON A SLIDER

## BACKGROUND OF THE INVENTION

### FIELD OF THE INVENTION

This invention relates to a means for the micro mechanical actuation of a transducer head on a slider in a data storage system. More particularly, this invention relates to the incorporation of an actuatable material with the head/slider assembly to control the horizontal and/or vertical positioning of the transducer head in relation to the slider.

### DESCRIPTION OF RELATED ART

One technique for satisfying the ever increasing demands for higher and higher recording densities, has been to reduce the gap between the read/write head and the recording media. In hard disk files, where the heads are mounted on a suitable air bearing slider, this can only be achieved by a suitable design to lower the height the slider flies over the disk. However, since a lower flying height greatly increases the incidence of head to disk contact with surface asperities, there is a practical limit on how small the gap can be made.

In the art, transducer to disk spacing has been maintained by a variety of techniques.

One technique has been to mechanically limit the positioning of the transducer in relation to the disk (see for example, Japanese Patent No. 552-30413 and 53-42020 and IBM Technical Disclosure Bulletin, Vol. 9, No. 12, May 1967, pg. 1746). However, these mechanical suspension designs can only position the transducer some permanent pre-set height above the disk and this pre-set height is limited by vertical runout and disk flutter which are generally very large for high performance file requirements. The result is a severe limit on the density to which recording can be maintained.

Another approach has been to electromechanically control the flexure of the suspension arm and thereby control the transducer to disk height (see, for example, U.S. Patent Nos. 3,183,516; 3,706,861; 4,151,569 and 4,169,276). In all of these flexure control devices, piezoelectric materials have been used for the suspension arm. Whereupon, on the application of an electric signal, the piezoelectric suspension arm is caused to bend and alter the head/slider fly height. However, the response time for this piezoelectric suspension arm is limited by the resonance of the suspension/slider assembly;

and proximity and maintenance of the fly height by suspension arm flexure has been limited by aerodynamic constraints for the air bearing slider and avoidance of slider to disk crashes.

In addition, a variety of other techniques have also been employed to provide control of the transducer to recording medium fly height. For example, U. S. Patent No. 3,676,874 shows a transducer head maintained a fixed distance above the recording medium by a pressure sensitive diaphragm and forced air cushion. U. S. Patent No. 3,763,331 teaches the maintenance of contour contact of the recording medium by use of a flexible diaphragm. IBM Technical Disclosure Bulletin, Volume 5, No. 1, June 1962, pg. 34, shows contact disk recording maintained by fine cantilevered springs.

However, as can be seen from the art described above, control of the spacing between the head/slider and the disk surface has principally been accomplished by flexure of the suspension and arm which flexure is slow to respond, subject to high amplitude, low frequency resonances, and crashes as a result of vertical runout and disk flutter.

Accordingly, it is an object of the present invention to provide means for controlling the horizontal and/or vertical motion of the transducer head by micro-mechanical actuation of said head relative to the slider, allowing close proximity of the head to disk surface to be maintained. The slider air bearing surface may be optimized to follow runout and flutter, while the small low mass head element may be separately controlled from this stable flying platform.

## SUMMARY OF THE INVENTION

In a system for the transfer of information to and from the surface of a storage medium by transducer heads wherein said heads are attached to an air bearing slider assembly such that a suspension arm and said slider maintain said heads a predetermined height over the storage medium, the transducer heads can be made to move relative to the slider assembly by the incorporation of an actuating material intermediately to the slider assembly and head. The actuating material can be: electromechanical, piezoelectric, electrostrictive, thermal, pneumatic, or hydraulic. The actuating material can be incorporated either integral to the head/slider assembly or made to bridge the slider to head attachment. With the incorporation of said actuatable material, said head can be moved micro-mechanically relative to said slider effecting relative and controllable motion either horizontally and/or vertically.

The foregoing and other objects, features and advantages of the invention will be apparent from the following more particular description of the invention as illustrated in the accompanying drawings.

BRIEF DESCRIPTION OF THE DRAWINGS

FIG. 1 is an enlarged perspective view of an embodiment of the micro-mechanical actuator assembly according to the subject invention wherein said actuator bridges the transducer head to slider allowing for critical control of the head relative to the slider;

FIG. 2 is an enlarged perspective view of an alternate embodiment of the micro mechanical actuator for use with a thin film slider head;

FIG. 3 is an enlarged section view taken on the plane line of FIG. 2;

FIG. 4 is an enlarged perspective view of a still further alternative embodiment of the micro mechanical actuator for use with a thin film slider head;

FIG. 5 is an enlarged section view taken on the plane line of FIG. 4;

FIG. 6 is an enlarged perspective view of a still further embodiment of the micro mechanical actuator for use with a thin film slider head;

FIG. 7 is an enlarged section view taken on the plane line of FIG. 6;

FIG. 8 is an enlarged perspective view of another embodiment of the micro mechanical actuator for use with a thin film slider head;

FIG. 9 is a graph of the piezoelectrically sensed rms level of rub noise as a function of drive voltage; and

FIG. 10 is a graph of the piezoelectric rms level of rub noise as a function of deflection.

DETAILED DESCRIPTION OF THE PREFERRED EMBODIMENTS

Broadly stated, the present invention is directed to a means for the micro mechanical actuation of a transducer head on an air bearing slider in a data storage system. More particularly, the invention relates to the incorporation of an actuatable material with the head/slider assembly to control the horizontal and/or vertical positioning of the transducer head with respect to the slider.

While the present invention will be described in connection with a magnetic transducer for the transfer of information to and from a magnetic surface of a magnetic recording medium, it is equally applicable to any data storage and retrieval system where precise control of the spacing between transducer and medium is required. These environments include, but are not limited to: magnetic drum or disk recording including hard and floppy disk applications, optical storage systems, and magnetic tape recording. Additionally, while the present invention will be described in conjunction with a magnetic transducer, the present invention can be used with any number of different kinds of transducers including optical transducers. It should be further understood that that the present invention is applicable to arrangements where the transducer is sought to move in either the vertical and/or horizontal direction.

The relationships of vertical and/or horizontal direction, slider and head assembly and suspension of said slider and head assembly over the recording medium (either moving or stationary) can represent many different configurational relationships of which several particular embodiments have been selected and described below.

To achieve higher recording densities in a system for the transfer of information to and from a moving magnetic surface of a magnetic medium by transducer heads, wherein an air bearing slider acts as a vehicle for supporting the magnetic recording head over the rotating disk surface, one oan reduce the gap between the read/write head and the recording media. In hard disk files, where the heads are made an integral part of a slider, this can be achieved by lowering the height the slider flies over the disk. Unfortunately, since a lower flying height greatly increases the incidence of file crashes, there is a practical limit on how small the gap can be made.

The subject invention is able to operate with smaller recording gaps without reducing the flying height. This is achieved by placing the read/write head at the end of an electromechanical bender which has been built into the slider. This slider is flow at a safe height and the bender energized such that it bends and lowers the head closer to the disk. With this technique, it is possible to achieve zero-gap or contact recording.

While lowering the head closer to the disk increases the probability of a file crash occurring, this risk can be minimized by making the size of the head as small as possible and, more effectively, by lowering it only at the time of read or write. Since read/write occurs only for a very small fraction of the time, the risk factor can be reduced by orders of magnitude. In addition, servo schemes can be included to control the motion of the bender. Capacitive sensing of the head-disk gap can permit locking onto as specific height thereby reducing fluctuations in the gap. Or, for the case of zero-gap contact recording, a piezoelectric transducer can be added to measure and use the "rub noise" to minimize the contact forces between the head and disk. If the actuatable material is of itself piezoelectric, one may sense with the same heads used to actuate the bender with a suitable buffer circuit.

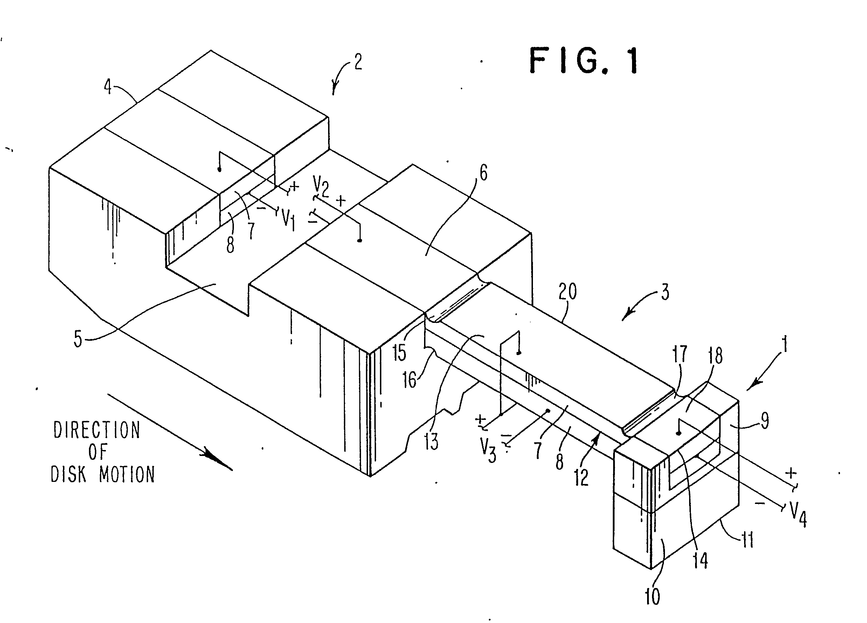

Referring now to FIG. 1, there is shown an enlarged perspective view of a magnetic (head) transducer assembly 1 mounted to an air bearing slider assembly 2. The head assembly 1 is attached to the slider assembly by actuating material 3 with said head/slider shown in a position such that information can be read and recorded on a moving magnetic medium located under said head.

As will be readily understood by those skilled in this art, the slider can be of any of a number of well known slider designs depending on the particular air bearing effect desired. For example, it is known that with a 14 inch hard disk, spinning at 3000 revolutions/minute, the velocity of the head/slider with respect to a data track in the medium on the disk is approximately 160 km per hour (100 mph). Depending on the shape of the head/slider air bearing surface, the flow of air between the head and medium can provide lift for a head loaded against the recording surface by up to several grams. Moreover, it is recognized that head/sliders are typically known in the art to have an air bearing pattern incorporating a number of rails or raised surfaces with the trailing edge of the middle housing the recording transducer while the two outer rails govern the flow of air.

As can be seen in FIG. 1, slider assembly 2 is similar to a typical three rail taper-flat slider. Differently, however, the transducer head assembly 1 is not integral with or housed at the trailing edge of the middle rail. Rather, actuator material 3 has been inserted intermediately between said head assembly 1 and the trailing edge of said slider. Wherefore, the head assembly 1 in being separated from the slider effects a small area which will be in close proximity to the disk and prevents lift due to an air bearing.

Additionally, the slider assembly 2 of FIG. 1 comprises a leading edge transducer 4 separated by a gimbal point 5 from a trailing edge transducer 6. As will be recognized by those skilled in the art, any conventional suspension system (not shown) can be attached to gimbal point 5 for suspension of the head/slider assembly.

Continuing from FIG. 1, the leading edge transducer 4 and the trailing edge transducer 6 are bonded to the upper surface of slider assembly 2 for measuring the dynamic performance of the head/slider assembly and for providing information concerning an adjacently rotating disk. The exact details of the operation of the above transducers 4 and 6 are described in U. S. Patent No. 4,532,802, entitled "Apparatus for Analyzing the Interface Between A Recording Disk and a Read-Write Head."

As can be seen in Fig. 1, each of the transducers 4 and 6 comprise a pair of oppositely poled blocks 7 and 8 of piezoelectric material such as lead-zirconate-titanate (PZT). Wherefore, as stated above, the PZT material of the leading edge transducer 4 is separated from the PZT material of the trailing edge transducer 6 by gimbal point 5.

From the trailing edge transducer 6, the PZT material is extended in a cantilever fashion to the head assembly 1. At the head assembly 1, the PZT material is glued into a channel in a ferrite insulating spacer 9. The spacer 9 is assembled in a stacked relationship with a read/write head 11 and a motion transducer 10. The motion transducer 10 recognized as producing signals from the head assembly 1 for comparison to the slider motion signals produced by the leading and trailing edge transducer. The motion transducer 10 can be a capacitive device, a magnetoresistive device or a tribo-electric device all of which are known in the art.

Returning to the PZT blocks 7 and 8 which form the leading edge 4 and trailing edge transducer 6 and which are cantilevered therefrom. The PZT blocks 7 and 8 are separated by and intimately bonded to an intermediate negative electrode 12. A wraparound positive electrode 13 extends along the bottom surface up one end and along the top surface of each transducer. Pairs of fine wire leads (not shown) are attached to the electrodes 12 and 13 of the various transducers so that an output signal $V_1$ is produced at transducer 4, an output signal $V_2$ is produced at transducer 6 and an output signal $V_4$ is produced at contact sensor 14.

Similarly, another pair of leads (not shown) are also provided for actuating the material 20 via signal $V_3$ associated therewith. It should be noted that while signals $V_2$, $V_3$, and $V_4$ are each associated with a part of the PZT Block 6 that the integrity of the respective signals are maintained by incorporation of electrode cut aways 15, 16, 17 and 18, which separate these respective signals along the PZT material.

At the head assembly 1, block 11, if conductive can provide capacitive sensing of the head to disk fly height to permit locking onto a specific height to thereby reduce fluctuations in the gap. However, in the case of zero-gap contact recording, a piezoelectric sensor and possibly the drive transducer itself, can be used to measure the "rub noise" to minimize the contact between head and disk.

In practice, the transducers are typically 1.00 mm wide, and approximately 1.00 mm thick. The length of the leading edge transducer is about 3.0 mm long while the trailing edge transducer is approximately 3.0 mm long to the edge of the slider and approximately 5mm long cantilevered therefrom.

In operation, the head/slider/actuator assembly would be positioned to fly at a coarse height above the moving disk. This height could be approximately 500 nm (5000A). Upon application of a signal $V_3$ to the piezoelectric bender 20, the head is lowered for read/write by deflection of the bender moving the head toward the disk. The size of the signal $V_3$ to achieve a certain deflection and operation of the actuating mechanism will be more readily understandable from the description of the other embodiments and deflection characteristics discussed more fully below.

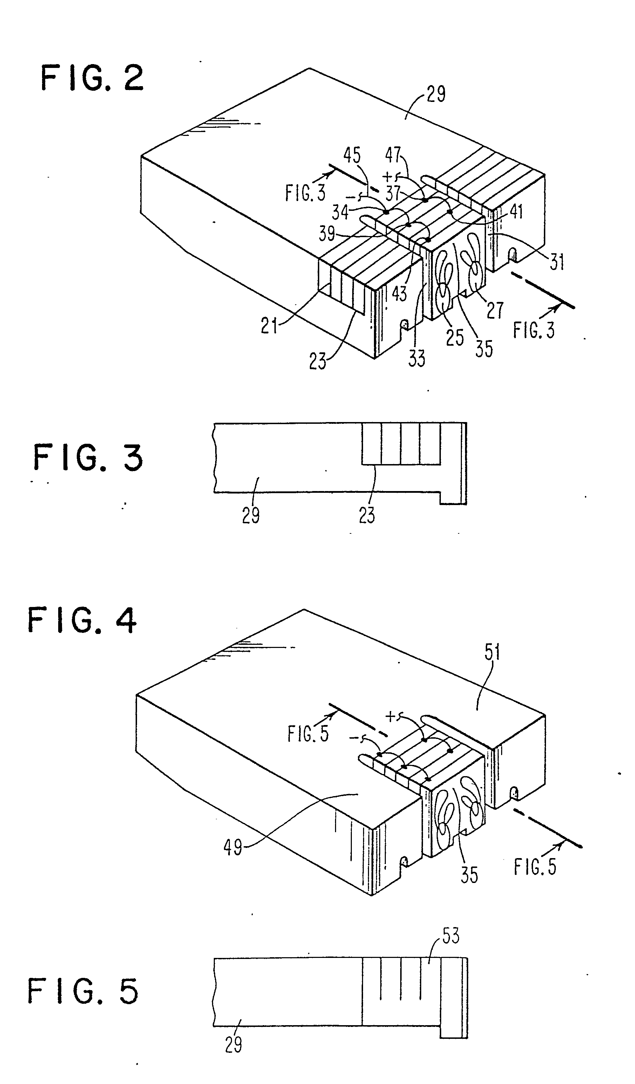

To appreciate the principles of the configuration and construction of the alternate embodiment of FIG. 2 according to this invention, it may be useful to review this head/slider assembly as known and used in the prior art.

It should be recognized by those skilled in the art that the head/slider can be any currently practiced ferrite thin film magnetic read/write head/slider. The slider itself can include a variety of rail designs to provide the specific aerodynamic equilibrium desired. For the thin film head, the electromagnet for the head is comprised of a thin pancake like, spiral film wherein an electrical conductor is deposited on the slider substrate. The magnetic yoke of the head is typically permalloy: an alloy of nickel and iron and is designed to include a predetermined read/write gap (glass) and data track width to be compatible with the disk format. The read/write transducer is located at the trailing edge of the slider and has contact pads located on said same trailing edge for electrical interconnection to the computer circuitry. A suspension supports the slider over the disk surface with an attitude and load force which, in part, determines its flying characteristics. Spacing (fly height) is controlled by proper choice of the size and shape of the slider together with its' suspension system.

Referring now to FIG. 2, an alternative embodiment for a micro-mechanical actuated head built into a thin film slider is shown. As can be seen in Fig. 2, piezoelectric material (PZT) 21 have been inserted into a slot machined into the head/slider 23. The PZT has been inserted approximate to the trailing edge of the slider but in front of the head elements 25 and 27. As shown, the stack is made up of four laminations of 25 $\mu$m (ten mil) thick plates. With four laminations a deflection of about 25 $\mu$m (one micro inch) per ten volts excitation can be expected. By using thinner and more plates, it should be readily recognized by those skilled in the art that the ratio of the deflection to the applied voltage can be increased. Similarly, by using only one plate it should be recognized that this ratio is decreased though this may be preferred for manufacturability or other reasons. Also, since it can be arranged so that the voltage is applied only in the direction of polarization, there is no danger of long term depolarization of the piezoelectric material.

From the enlarged section of FIG. 3, it can be seen that the laminated stack is glued in a groove 23 cut into the slider material 29. The groove extends laterally across the whole width of the slider and is approximately 1 mm deep. This allows row level fabrication.

To accommodate flexture by the expansion and contraction of the PZT materil and allow for the movement of the head element towards and away from the moving disk, two slots 31 and 33 are machined lengthwise through the trailing edge of the slider. These slots serve to create a separate bendable portion 35 of the head/slider assembly.

Intermediate to each laminate of glued PZT material is inserted alternating negative electrodes 34, 39 and 43, and positive electrodes 37 and 41. A pair of fine wire leads 45 and 47 are attached to the respective electrodes 34 and 37 to provide voltage to the piezoelectric material or an overlay of appropriately metallized substrate may be used to connect to these electrodes and/or to the recording heads.

In operation, when the piezoelectric stack 21 is energized so that it expands, the constraint of the lower inactive slider material causes the arm 35 to bend and bring the read/write heads 25 and 27 close to the disk. In addition to the flexture of the piezoelectric material caused by application of signal $V_s$, it is also noted that thermal differential between the piezoelectric material and slider can cause the arm to bend. For a typical piezoelectric ceramic, bonded to an alumina type slider, a 1°C change in temperature gives the same bending as 4 volts excitation. This additional bending, if unwanted, can be compensated by using thinner and more laminations and can be eliminated by choosing a slider and actuator material pair with matched thermal expansion coefficients. In addition, the head/slider can be modified so as to include only active material (e.g., piezoelectric ceramic) in the bender arm 35 and only slider material in the rails thereby minimizing the effects of any differences in thermal expansion.

FIG. 4 shows a still further embodiment of a head/slider according to this invention wherein the slider material has only been removed from the bendable portion 35. FIG. 5 is an enlarged perspective view taken along the plane line of FIG. 4 showing the cross section of the PZT insert 53 with the slider 29. As the PZT insert 53 is no longer spanned across the legs 49 and 51 of the slider, different techniques are necessary to incorporate said material with the slider. The PZT laminations can now be assembled prior to bonding to the slider. However, as there is no piezoelectric material over the air bearing surface (ABS) regions, there is significantly reduced warping of the ABS due to changes in temperature.

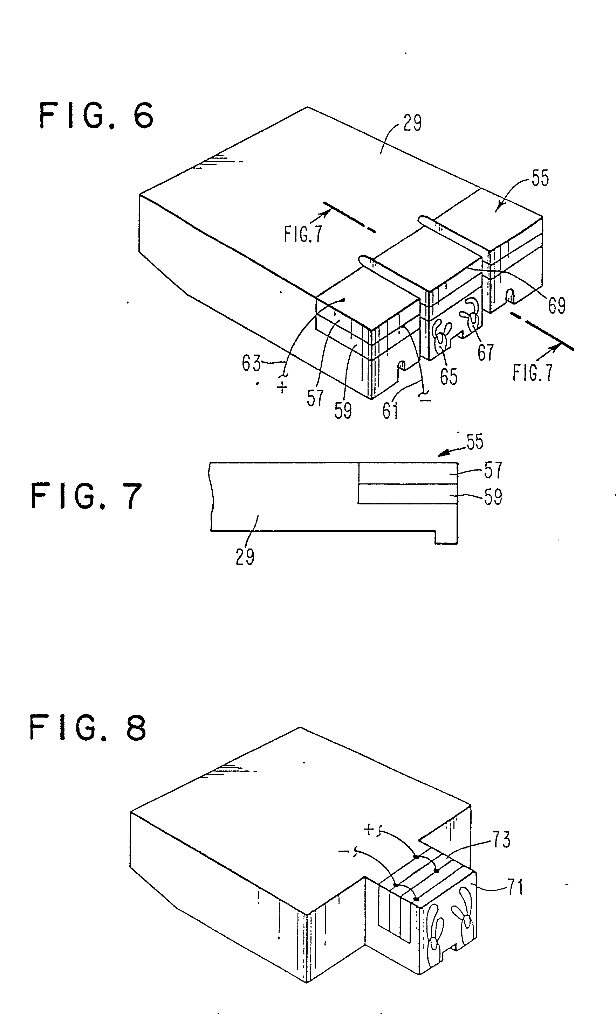

FIG. 6 is an enlarged perspective view of a still further embodiment of the micro mechanical actuator of this invention for use with a thin film slider head. As can be seen in the figure, the piezoelectric material 55 is laminated transversely into an L-shaped cavity along the trailing edge of the slider 29. The piezoelectric material comprises a pair of oppositely poled blocks 57 and 59 of a material such as lead-zirconate-titanite (PZT).

As discussed above regarding FIG. 1, and as recognized in the art, the blocks are separated by and intermediately bonded to an intermediate negative electrode 61. A wraparound positive electrode 63 extends along the bottom surface of the piezoelectric blocks, up one end, and along the top surface, of each transducer. A pair of leads (not shown), are then attached to the respective electrodes.

Similar to FIGS. 2 and 4, the transducer heads 65 and 67 are located on the bender arm 69 and are connected to the computer and control circuitry via bonding pads in the usual fashion.

FIG. 7 is a planar view through the section plane of FIG. 6 showing the piezoelectric material 55 assembled to the bender arm 69 in relation to the trailing edge with transducer heads 65 and 67.

In a still further embodiments, FIG. 8 shows the micro-mechanical bendable actuator with the transducer heads on a sole extended rail 71. The piezoelectric material 73 is a four block laminate as shown and described in FIG. 2. Actuation and operation are identical to that for FIG. 2 except that the bender arm is without adjoining rails and experiences different air bearing effects.

The operation of these and various other embodiments of the micro mechanical actuator of this invention will now be described in detail.

In operation, the head/slider is positioned by the suspension assembly at approximately 500 nm above the disk surface. This is in contrast to the typical head/slider height of 400 nanometers when a slider without bender capabilities is used. At a height of 500 nm, the incidence of file crashes is greatly reduced and air bearing has low resonant frequencies. However, to read and write, the head must be positioned at near contact or contact height above the disk.

One method of sensing the degree of proximity or contact of the recording head is to utilize the current signal from the piezoelectric (PZT) bender. However, the signal from a separate piezoelectric, magnetoresistive or capacitive element, or a heat signal from a pyroelectric material at the tip can also be used. In using a piezoelectric approach, one can obtain the force by looking at the signal after calibration or one can measure the acoustic emission in the several hundred Kilohertz range which increases dramatically at the onset of contact.

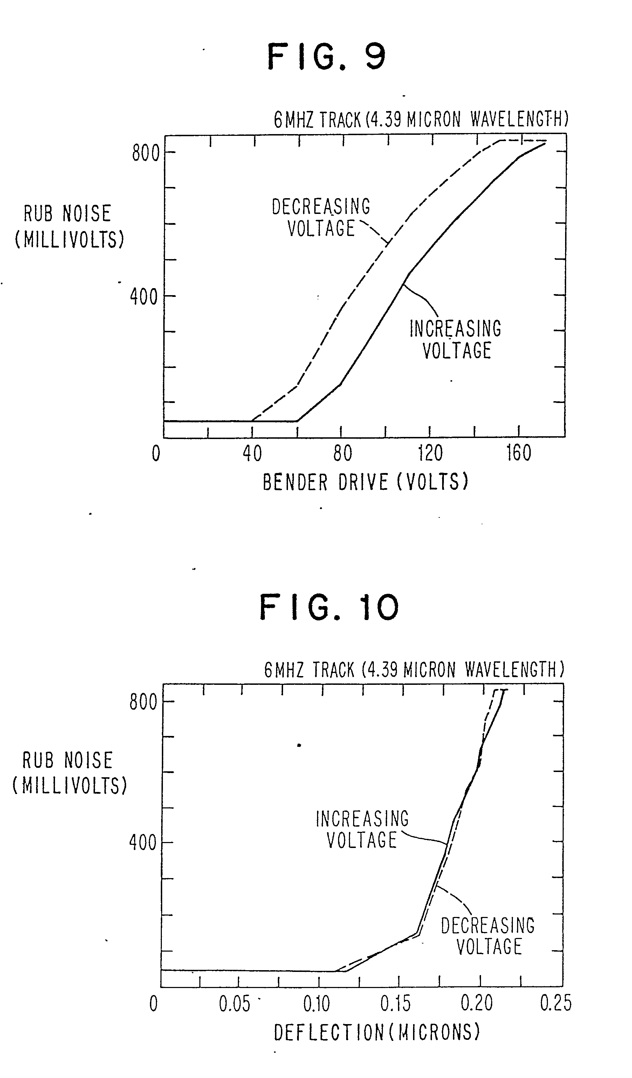

In using acoustic emission, it is possible to measure the rub noise due to contact by monitoring the AC modulation of the bender drive voltage. The rms level of this noise is shown in FIG. 9 as a function of the drive voltage. As can be seen in FIG. 9, little change in the noise occurs until contact occurs, after which it increases rapidly. FIG. 10 is a plot of the rub noise as a function of bender displacement. As can be seen in the FIG. 10, there is an excellent correlation between the rub noise and displacement and supports the concept of using the rub noise to servo the bender. The optimum level of rubbing and hence servoing, would in this case be between 100 and 200 millivolts.

One type of plastic piezoelectric which could be used as a sensor material is $PVF_2$, polyvinyl-fluoride. For example, for the slider shown in FIG. 2, above, the $PVF_2$ could be laminated to the bendable piezoelectric material for incorporation with the head/slider. Because the $PVF_2$ compresses easily, the bendable piezoelectric material can bend while also dampening the vibration of the head due to the $PVF_2$ clamping.

Another means of sensing the degree of contact or proximity of the recording head to the disk is by monitoring optical noise data. Optical fringes that are created by the gap between the slider and the disk are monitored by a photodiode. The spectral density components of these photodiode detectors fluctuating, then indicate the position of transducer head.

It should be recognized by those skilled in the art that other means of sensing proximity to the disk and/or contact recording could be employed such as capacitive sensing, magnetoresistive sensing or any other proximity or force sensing. Thus, by sensing the degree of proximity or contact, one can utilize a servo system for controlling the fly height in a closed loop system.

In one embodiment, the envelope of the piezoelectric rub noise at the appropriate frequency is used as the feedback signal. The bender can then be driven with the AC and DC component of this derived signal. This allows precise control of the minimum contact force desired, even in the presence of disk runout and suspension and air bearing resonances. This control of the contact force reduces the rubbing force giving much less surface disk wear.

In one test a head/slider embodied as shown in FIG. 4, was flows in a magnetic test strand on a 5.25 inch particulate disk at a tangential disk velocity of 26 meters/second. The slider was used to read a sinusoidal pattern previously written by a regular non-bendable slider. It was observed that driving the head closer to the disk increased the signal by about 30%.

Wallce's spacing loss formula:

$$V_{read} \; \alpha \; e^{-kd}$$

can be used to calculate the change in the gap by using the ratio of the signal amplitudes. Letting zero volt drive be the reference position, the deflection of the bender towards the disk is:

Deflection = $1/k \; {}^{\ell}n \; Vread/V$

where $k = 2\pi/\lambda$ and $\lambda$ = wavelength of the written pattern.

The bender was found to deflect linearly until a drive of about 80 volts and above that appears to flatten out. Contact most likely occurs at the transition point and subsequently restricts further decrease in the recording gap. An absolute gap spacing at the transition point was not determined.

In addition, because the contact element is distinct from the air bearing surface, the contact width along the track may be much less than the air bearing rail width. This reduces disk wear by the ratio of the rail width to the contact width and results in reduction in wear by a factor of approximately 10.

In a second test, head/sliders as embodied as shown in FIGS. 2 and 4 have been flown with the bender driven to contact (as indicated by an increase in the rub noise) while sitting over the same track for periods in excess of 100 hours. These sliders have not only not crashed but have not caused any apparent damage to the disk. The disk (particulate medium) does get buffed by the process as is evidenced by a decrease in the rub noise with time. An approximate calculation shows that 100 hours of continuous contact on the same track is equivalent to a 116 year life of normal use. (per head use is approximately 1/1000 of the time).

As mentioned above, it should be recognized by those skilled in the art that various other embodiments for the micro mechanical head/slider of this invention are possible. While FIGS. 1, 2 and 4, show bending toward and away from the disk, it is to be readily understood that the piezoelectric material can be assembled so as to cause the head to move side to side allowing microtrack positioning.

In other embodiments the design criteria of resonant frequency of the bender and slider segments, desired servo bandwidths and micropositioning capability are some of the factors to be considered in designing the head/slider. Another possibility is to use a single wide slider but lower multiple heads from independent bender elements. This allows a fast access over fewer tracks per head or at least, results in less net seek distance per head. Moreover, none of these embodiments are restricted for use with magnetic transducers but can be applied to optical, audio or any transducer where positioning on the medium is a consideration.

While the invention has been described with respect to particular embodiments thereof, it will be apparent to those of skill in the art, that modifications may be made thereto without departing from the spirit and scope of the present invention.

## Claims

1. In a system for the transfer of information to and from a storage medium by transducer head wherein said heads are attached to an air bearing slider assembly such that a suspension arm and said slider maintains said head a predetermined fly height over the storage medium, the improvement to said slider head assembly comprising: the incorporation of electromechanicl actuatable materials intermediately to said slider and head such that by actuation of said material said transducer head can be made to move relative to the slider effecting relative and controllable motion of the head element with respect to the slider body.

2. Apparatus according to Claim 1 wherein said transducer head is a magnetic or optical recording head for the transfer of information to and from a moving magnetic disk, or to and from an optical storage medium respectively.

3. Apparatus according to Claim 1 or 2 wherein the motion of said transducer is in a vertical and/or horizontal plane relative to the slider body.

4. Apparatus according to Claim 1, 2 or 3 wherein the electromechanical actuatable materials is selected from the group consisting of: piezoelectric, electrorestrictive, hydraulic, pneumatic or thermally actuatable materials.

5. Apparatus according to Claim 1,2,3 or 4 wherein the electromechanical actuatable material is a laminate of a piezoelectric material bridging and connecting the slider to the transducer head assembly.

6. Apparatus according to Claim 5 wherein the slider further comprises a leading edge transducer located on the opposite to disk side of said slider.

7. Apparatus according to Claim 6 wherein the slider further comprises a trailing edge transducer located on the opposite top disk side of slider, said trailing edge transducer integral to and part of piezoelectric laminate bridging said head to said slider.

8. Apparatus according to Claim 7 wherein said head comprises a capacitive sensor and a contact sensor for determining the fluctuatuion and height respectively of said transducer head.

9. Apparatus for accelerated wear testing of a magnetic recording disk, comprising: means for simulating the geometry weight and material properties of a head slider assembly and at least one electromechanical means located intermediately to said slider and said transducer means such that by actuation of said electromechanical means said head can be maintained at near contact or contact fly height while maintaining the slider at another predetermined fly height.

FIG. 1

DIRECTION OF DISK MOTION

FIG. 2

FIG. 3

FIG. 4

FIG. 5

FIG. 6

FIG. 7

FIG. 8

# FIG. 9

6MHZ TRACK (4.39 MICRON WAVELENGTH)

RUB NOISE (MILLIVOLTS)

DECREASING VOLTAGE

INCREASING VOLTAGE

BENDER DRIVE (VOLTS)

# FIG. 10

6MHZ TRACK (4.39 MICRON WAVELENGTH)

RUB NOISE (MILLIVOLTS)

INCREASING VOLTAGE

DECREASING VOLTAGE

DEFLECTION (MICRONS)